# EUROPEAN PATENT APPLICATION

(11) **EP 1 744 314 A1**
(43) Date of publication of application: **17.01.2007**
(21) Application number: 05015006.9
(22) Date of filing: 11.07.2005
(51) Int. Cl.: G11B 20/00, G11B 20/12, G11B 27/034

(54) **Recordable compact disc**

(71) Applicant: Sony DADC Austria AG, 5081 Anif (AT)
(72) Inventor: Hopoldseder, Erich, 5081 Anif (AT); Reiter, Gottfried, 5081 Anif (AT); Perlot, Stefan, 5081 Anif (AT)
(74) Representative: Müller - Hoffmann & Partner

(57) **Abstract**

A recordable compact disc (1', 1") comprises a recorded and/ or mastered area (12) and a recordable user area (13), wherein said recorded and/or mastered area (12) serves for preventing audio tracks to be recorded into said recordable user area (13) by a standard compact disc recorder and/or for preventing audio data located after said recorded and/or mastered area (12) to be read by a standard compact disc audio player, said recorded and/or mastered area (12) comprising at least one finalized and/or non-finalized data session (14, 15) located at the beginning of the recordable compact disc (1'. 1").

## Description

### Technical Field

The invention relates to recordable and rewritable compact discs, in particular to CD-Rs, CD-RWs, Hybrid CD-Rs and Hybrid CD-RWs.

### Background

Recordable and rewritable compact discs such as CD-Rs or CD-RWs serve as information carrier for different kinds of information like audio information or computer application data. The customer who bought the recordable/rewritable compact disc decides whether audio information, other types of information like computer application data or a combination of different types of information is stored on the recordable/rewritable compact discs.

Even if the customer does not record audio information onto the recordable/rewritable compact disc, a so called blank tape levy has to be paid to copyright organizations for the recordable/rewritable compact disc since the copyright organizations do not have the possibility to control whether audio information is recorded onto the recordable/rewritable compact disc or not.

It is an objective of the present invention to provide a possibility of avoiding unnecessary payment of blank tape levies to copyright organizations for recordable/rewritable compact discs if the customer knows in advance that he does not want to record audio information onto the recordable/rewritable compact discs.

### Summary of the Invention

In order to solve this objective, the present invention provides a recordable/rewritable compact disc according to claim 1. Further, the present invention provides a master disc, a data signal and a recording/ mastering method according to claims 11, 12 and 13. Further features and embodiments are defined in respective dependent claims.

A dispensation for paying blank type levies may be provided by copyright organizations for "blank" data carriers according to the present invention since these "blank" data carriers can essentially be used only for data files and not for audio information as interpretable by a standard compact disc audio player.

A recordable/rewritable compact disc according to the present invention comprises a recorded and/or mastered area and a recordable/rewritable user area, wherein said recorded and/or mastered area serves for preventing audio tracks from being recorded into said recordable/rewritable user area by a standard compact disc recorder and/or for preventing audio tracks located after said recorded and/or mastered area from being read by a standard compact disc audio player, said recorded and/or mastered area comprising at least one finalized and/or non-finalized session located at the beginning of the recordable/rewritable compact disc.

The basic principle underlying the present invention is to modify recordable/rewritable compact discs in a way such that it is not possible or such that it makes no sense for a user to record audio information onto the recordable/rewritable compact discs assuming that standard compact disc recorders and standard recording software products are used. This goal is achieved by creating a recorded and/or mastered area on the recordable/rewritable compact discs which is located at the beginning of the recordable/rewritable compact disc. "Beginning of the recordable/rewritable compact disc" means in this context that the starting position of the recorded and/or mastered area is chosen such that it is not possible to record audio tracks or data tracks before the starting position. Only PCA data, PMA data and possibly Lead In Area data (depending on the kind of the recorded and/or mastered area) can be recorded before the recorded and/or mastered area by the customer.

Within the scope of the present invention, the term "audio information" means audio information encoded in accordance with the Red Book specification. Further, within the scope of the present invention, the term "audio track" means that the track comprises audio information encoded in accordance with the Red Book specification. Further, for sake of simplicity, in the following description, the term "recordable compact disc" means that the compact disc is either recordable (CD-R, Hybrid CD-R) or rewritable (CD-RW, Hybrid CD-RW). In addition, within the scope of the present invention, the term "session" means a session comprising at least one complete or incomplete track. The session may comprise data tracks and/or audio tracks. The term "standard compact disc audio player" in particular means a compact disc player bearing the known trademark "compact disc digital audio". Within the scope of the present invention, the term "mastered area", "mastered session", "mastered track" (or a part thereof) means an area on the compact disc comprising information (pits) which is stored onto the compact disc during the manufacturing process of the compact disc (the storing process is performed using a "master" or stampers). Within the scope of the present invention, the term "recorded area", "recorded session", "recorded track" (or a part thereof) means an area on the compact disc comprising information (pits or marks or the like) which is stored onto the compact disc after the manufacturing process during a recording process. Within the scope of the present invention, the term "recordable/rewritable user area" means an unrecorded area (or an unrecorded track or a part thereof) on the compact disc into which no signal has been recorded or in which a previously recorded signal has been physically erased (a "blank" area) and which can be recorded by a user.

Generally, the recording software used to record audio tracks with standard compact disc recorders does only allow to record audio tracks into the first session of a recordable compact disc. Further, if the first session is a non-finalized session which comprises a data track, the recording software used to record audio tracks with standard compact disc recorders generally does not allow audio tracks to be appended after the data track into the remaining recordable user area of the first session. Therefore, the recorded/mastered area makes it impossible for the customer to record audio tracks into the first session (if this session comprises a data track) or into second or or further subsequent sessions (if a first session already exists). Even if it were possible to record audio tracks at such positions using modified or non standard-conform compact disc recorders/recording software, it would generally not be possible/senseless to access these audio tracks by a standard compact disc audio player since a standard compact disc audio player expects audio tracks only in the first session or, if a data track is located within the first session, some standard compact disc audio players possibly convert the data track located in the first session into undesired noise, thereby limiting the audio quality of the recordable compact disc. As a consequence, it would make no sense to record audio tracks onto recordable compact discs according to the present invention.

Since it is impossible/makes no sense to record audio tracks onto the recordable compact discs according to the present invention, copyright organisations may agree to suspend or reduce blank tape levies which again means that the recordable compact discs can be sold at a lower price than standard recordable compact discs to end customers.

The present invention further provides a master disc being adapted for producing a recordable compact disc in a replication process comprising a mastered area and a recordable user area, wherein said mastered area is adapted to prevent audio tracks from being recorded into said recordable user area by a standard compact disc recorder and/or to prevent audio tracks located after said mastered area from being read by a standard compact disc audio player, said mastered area comprising at least one finalized and/or non-finalized session located at the beginning of the recordable compact disc.

The present invention further provides a data signal representing data to be recorded/mastered onto a recordable compact disc, thereby obtaining a recordable compact disc comprising a recorded and/or mastered area and a recordable user area, wherein said recorded and/or mastered area serves for preventing audio tracks from being recorded into said recordable user area by a standard compact disc recorder and/or for preventing audio tracks located after said recorded and/or mastered area from being read by a standard compact disc audio player, said recorded and/or mastered area comprising at least one finalized and/or non-finalized session located at the beginning of the recordable compact disc.

Last, the present invention provides a method for recording/mastering a recordable compact disc, said recording/mastering process comprising the step of creating a recorded and/or mastered area and a recordable user area, wherein said recorded and/or mastered area is adapted to prevent audio tracks from being recorded into said recordable user area by a standard compact disc recorder and/or to prevent audio tracks located after said recorded and/or mastered area from being read by a standard compact disc audio player, said recorded and/or mastered area comprising at least one finalized and/or non-finalized session located at the beginning of the recordable compact disc.

### Brief Description of the Drawings

- Fig. 1: is a schematic drawing showing an example of the layout of a known multisession recordable compact disc.
- Fig. 2: is a schematic drawing showing a first embodiment of the layout of the recordable compact disc according to the present invention.
- Fig. 3: is a schematic drawing showing a second embodiment of the layout of the recordable compact disc according to the present invention.

### Best Mode for Carrying out the Invention

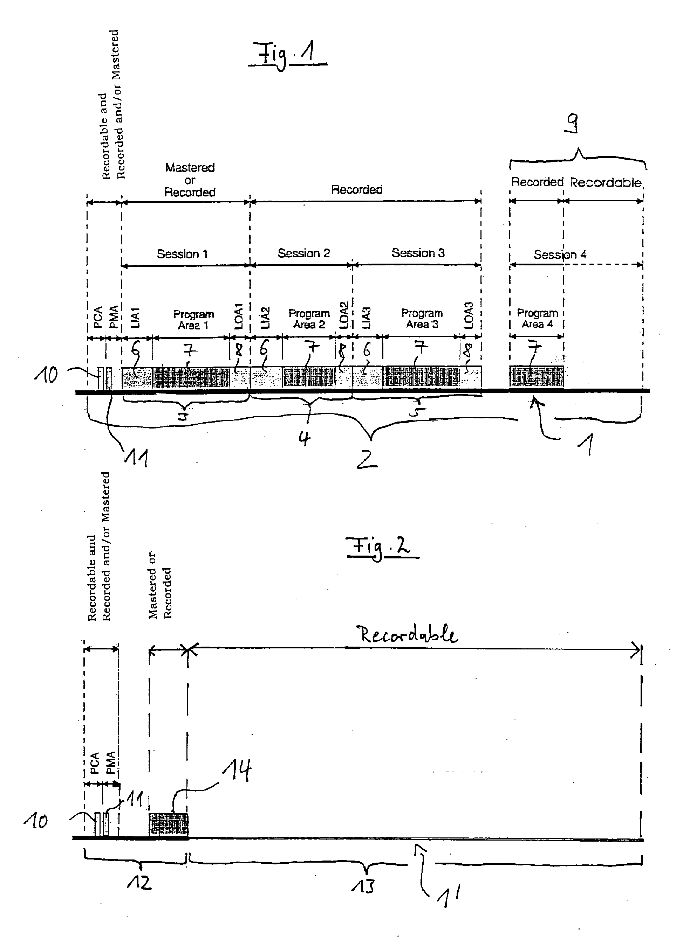

Fig. 1 shows an example representative of the layout of information stored within the information area of a recordable compact disc. A recordable compact disc 1 comprises an information area 2 in which content data as well as controlling data necessary for writing/reading the content data is stored. In this example, the information area 2 comprises a first session 3, a second session 4 and a third session 5. Each of the sessions is finalized, i. e. comprises a lead-in area LIA 6, a track data area 7 which may comprise data tracks and/or audio tracks, respectively, and a lead-out area LOA 8. In this example, the first session 3 has been generated by a mastering process, whereas the second session 4 and the third session 5 have been generated by a recording process.

The information area 2 further includes a non-finalized fourth session 9 which may comprise one or more data tracks and/or audio tracks. The information area 2 further comprises a PCA (Power Calibration Area) area serving for laser beam power calibration purposes and a PMA (Program Memory Area) area which contains information about the mastered and/or recorded tracks.

Fig. 2 shows a first embodiment of the recordable compact disc according to the present invention. The recordable compact disc 1' comprises a recorded and/or mastered area 12 and a recordable user area 13. The recorded and/or mastered area 12 serves for preventing audio tracks from being recorded into the recordable user area 13 by a standard compact disc recorder and/or for preventing audio tracks located after the recorded and/or mastered area 12 (which may be recorded by a customer using non standard recorders/recording software) from being read by a standard compact disc audio player. The recorded and/or mastered area 12 comprises a non-finalized data session 14 located at the beginning of the recordable compact disc 1'. In this embodiment, the non-finalized data session 14 consists of at least one data track.

The data session 14 may for example consist of one single incomplete data track or of one complete data track. Alternatively, the data session 14 may consist of several data tracks, wherein the last data track may be incomplete or complete. The data session 14 may also include reserved tracks.

Controlling data needed to access the data of the data session 14 or needed to continue the recording process of the data session 14 is included within the PMA area 11. The PCA area 10 is used by the compact disc recorder to determine the correct laser power for writing.

The data session 14 may be generated by a recording process, a mastering process or a combination of both.

The recorded and/or mastered area 12 serves as means for preventing audio tracks from being recorded into the recordable user area 13: If the recording software used to record audio tracks with a standard compact disc recorder detects that there is a data track in the first (non-finalized) session 14 (it is not possible to record audio/data tracks before the beginning of the data session 14), the recording software refuses to record audio tracks into the recordable user area 13.

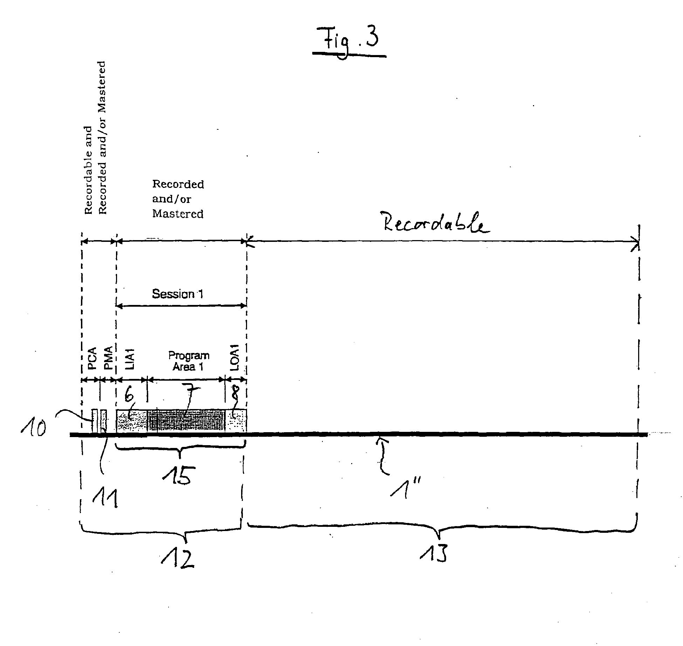

Fig. 3 shows a second embodiment of the recordable compact disc 1" according to the present invention. In contrast to Fig. 2, the recordable compact disc 1" consists of a finalized session 15 which can be a data session or an audio session. The finalized session comprises a lead-in area 6, a track data area 7 comprising data tracks or audio tracks or a combination thereof, and a lead-out area 8. The finalized session 15 may also include reserved tracks.

It is also possible to combine the embodiments shown in Fig. 2 and Fig. 3, i. e. to provide a recorded and/or mastered area 12 on the recordable compact disc which comprises one or more finalized sessions 15 and one non-finalized session 14.

Preferably, the lengths of the sessions 14 and 15 are as short as possible, however, preferably in compliance with the recordable compact disc specifications. Advantage of this embodiment is that, on the one hand, it is ensured that no audio track can be recorded into the recordable user area 13/read from the recordable user area 13, however, on the other hand, the maximum possible recording capacity is available for the customer. According to the recordable compact disc specifications the minimum track length is 4 seconds (or 300 sectors) and the minimum lead-out length of the first session is 01:30:00 (or 6750 sectors). The minimum lead-in length of the second or higher session(s) of a disc is 01:00:00 (or 4500 sectors). The minimum length of the lead-out of the second or higher session(s) of a disc is 00:30:00 (or 2250 sectors). According to the present invention, these minimum length values may be combined in order to obtain sessions 14, 15 of minimum lengths.

In a specific embodiment of the present invention, the data being included within the sessions 14 and 15 do not include any usable information ("dummy data"). Alternatively, it is possible to include usable information like user data, software application data or advertisement data into the sessions 14 and 15.

In the following description, further aspects of the invention will be described.

The present invention relates to a recordable compact disc which allows to record data content only. Currently it is possible to record either audio information or data content onto recordable compact discs. Therefore, a blank tape levy has to be paid to copyright organizations regardless of the type of information which is recorded. Standard compact disc audio players can read only those audio tracks which are recorded in the first session. According to the present invention, recordable compact discs are provided which include one recorded and/or mastered session containing e. g. a small dummy data file.

This session (for example a data session) can be recorded in one of three modes: Session at Once (complete or closed session), Track at Once (complete track) or Packet Writing (incomplete track) - depending on the requirements of the customers. This session can be mastered and then pre-embossed during disc replication (preferred). For CD-R it can be recorded using a compact disc recorder (e. g. existing Low Volume Duplication Equipment).

The customers or end users can append further sessions containing data files only because current recording software does not allow to append audio tracks.

Even if new recording software is developed to append audio tracks, these tracks are not playable on standard compact disc audio players. Also it is not possible to record audio tracks using consumer compact disc audio recorders (home decks).

A further advantage of the present invention is that it is not possible to make a 1:1 copy from an existing disc to the recordable compact disc according to the present invention.

### References:

Red Book or IEC-908 (Specification for CD-Audio)
Yellow Book Book or ECMA-130 (Specification for CD-ROM)
Orange Book Part II and Part III (Specification for CD-R and CD-RW).
Blue Book (Specification for Multisession CD)
(all Books are published by Phillips/Sony)

### Reference Symbols

- 1: recordable compact disc
- 1', 1": information area
- 3: first session
- 4: second session
- 5: third session
- 6: lead-in area
- 7: track data area
- 8: lead-out area
- 9: fourth session
- 10: PCA area
- 11: PMA area
- 12: recorded and/or mastered area
- 13: recordable user area
- 14: session
- 15: session

## Claims

1. A recordable/ rewritable compact disc (1', 1") comprising a recorded and/ or mastered area (12) and a recordable/rewritable user area (13), wherein said recorded and/or mastered area (12) is adapted to prevent audio tracks from being recorded into said recordable/rewritable user area (13) by a standard compact disc recorder and/or to prevent audio tracks located after said recorded and/or mastered area (12) from being read by a standard compact disc audio player, said recorded and/or mastered area (12) comprising at least one finalized and/or non-finalized session (14, 15) located at the beginning of the recordable/rewritable compact disc (1', 1").

2. The recordable/rewritable compact disc (1') according to claim 1, wherein the last of said at least one recorded and/or mastered session (14) comprises a incomplete recorded and/ or mastered data track.

3. The recordable/rewritable compact disc (1', 1") according to claim 1, wherein the last of said at least one recorded and/or mastered session (14, 15) comprises a complete recorded and/or mastered data track or audio track.

4. The recordable/ rewritable compact disc (1") according to claim 1 or 3, wherein the last of said at least one recorded and/or mastered session (15) is a finalized data session or a finalized audio session.

5. The recordable/rewritable compact disc (1', 1") according to any one of the claims 1 to 4, wherein said recorded and/or mastered area (12) comprises only one session (14, 15), the length of said session being as short as possible and being in conformity with recordable/rewritable compact disc specifications.

6. The recordable/rewritable compact disc (1', 1") according to claim 5, wherein said only one session (14, 15) comprises only one track having a length of 300 sectors.

7. The recordable/rewritable compact disc (1', 1") according to claims 5 or 6, wherein said only one session (14, 15) comprises a lead-out area having a length of 6750 sectors.

8. The recordable/rewritable compact disc (1', 1") according to any one of the claims 1 to 7, wherein the content of said at least one recorded and/or mastered session (14, 15) does not include any usable information.

9. The recordable /rewritable compact disc (1', 1") according to any one of the claims 1 to 8, wherein the data of said at least one recorded and/or mastered session (14, 15) includes usable information like audio information, computer application data, user data, software application data or advertisment data.

10. The recordable/rewritable compact disc (1', 1") according to claim 1 to 4, wherein said recorded and/or mastered session comprises a reserved track for recording user specific information.

11. Master disc being adapted for producing a recordable/rewritable compact disc (1', 1") in a replication process comprising a mastered area (12) and a recordable/rewritable user area (13), wherein said mastered area (12) is adapted to prevent audio tracks from being recorded into said recordable/rewritable user area (13) by a standard compact disc recorder and/or to prevent audio tracks located after said mastered area (12) from being read by a standard compact disc audio player, said mastered area (12) comprising at least one finalized and/or non-finalized session (14, 15) located at the beginning of the recordable/rewritable compact disc (1', 1").

12. Data signal representing data to be recorded/mastered onto a recordable/rewritable compact disc, thereby obtaining a recordable/rewritable compact disc (1', 1") comprising a recorded and/or mastered area (12) and a recordable/rewritable user area (13), wherein said recorded and/or mastered area (12) is adapted to prevent audio tracks from being recorded into said recordable/rewritable user area (13) by a standard compact disc recorder and/or to prevent audio tracks located after said recorded and/or mastered area (12) from being read by a standard compact disc audio player, said recorded and/or mastered area (12) comprising at least one finalized and/or non-finalized session (14, 15) located at the beginning of the recordable/rewritable compact disc (1', 1").

13. Method for recording/mastering a recordable/rewritable compact disc (1', 1"), said recording/mastering process comprising the step of creating a recorded and/or mastered area (12) and a recordable/rewritable user area (13), wherein said recorded and/or mastered area (12) is adapted to prevent audio tracks from being recorded into said recordable/ rewritable user area (13) by a standard compact disc recorder and/or to prevent audio tracks located after said recorded and/or mastered area (12) from being read by a standard compact disc audio player, said recorded and/or mastered area (12) comprising at least one finalized and/or non-finalized session (14, 15) located at the beginning of the recordable/rewritable compact disc (1', 1").
